# EUROPEAN PATENT APPLICATION

(11) **EP 2 869 588 A1**
(43) Date of publication of application: **06.05.2015**
(21) Application number: 14175928.2
(22) Date of filing: 07.07.2014
(51) Int. Cl.: H04N 21/438, H04N 21/442, H04N 21/45, H04N 21/482, H04N 21/443

(54) **Broadcast receiving apparatus and method for tuning channel thereof**

(30) Priority: 05.11.2013 KR 20130133797
(71) Applicant: Samsung Electronics Co., Ltd, Gyeonggi-do 443-742 (KR)
(72) Inventor: Hyeon, Byeong-cheol, Suwon-si, Gyeonggi-do (KR); Choi, Woo-suk, Seoul (KR)
(74) Representative: Appleyard Lees

(57) **Abstract**

A broadcast receiving apparatus and a method for tuning a channel of a broadcast receiving apparatus is provided. The method includes displaying contents received through a broadcast channel (S710), changing, if a channel zapping command is received (S720), the broadcast channel, displaying (S740), if the channel zapping command is consecutively received a plurality of times within a predetermined amount of time (S730), a user interface (UI) using which a user can select a broadcast channel, and tuning (S750), if a broadcast channel is selected from the UI, the selected broadcast channel.

## Description

### CROSS-REFERENCE TO RELATED APPLICATIONS

This application claims priority from Korean Patent Application No. 10-2013-0133797, filed on November 5, 2013 in the Korean Intellectual Property Office, the disclosure of which is incorporated herein by reference in its entirety.

### BACKGROUND

### 1. Field

Apparatus and methods consistent with exemplary embodiments relate to a broadcast receiving apparatus and a method for tuning a channel thereof, and more particularly, to a broadcast receiving apparatus which provides a channel zapping function and a method for tuning a channel thereof.

### 2. Description of the Related Art

With the recent development of multimedia apparatuses, users are able to watch various broadcasts at any place and time without limitations. As contents which may be provided through broadcast channels increase, the number of broadcast channels available to the user increase as well.

Various methods are available to the user for changing a channel. Users commonly use a sequential search method which incorporates using the channel up/down command. That is, a user changes channels sequentially, identifies programs which are being broadcast on each channel, and selects a desired channel.

Recent broadcast receiving apparatuses may be equipped with a key or a menu button which displays a recommended channel list, a preferred channel list, and an Electronic Program Guide (EPG) information list. However, displaying a user interface (UI) screen including the aforementioned lists by using a key or a menu causes an interruption in the continuity of watching broadcasts and incorporates an added inconvenience of selecting the key or menu button.

### SUMMARY OF THE INVENTION

According to the present invention there is provided an apparatus and method as set forth in the appended claims. Other features of the invention will be apparent from the dependent claims, and the description which follows.

Exemplary embodiments are provided to address the aforementioned and other problems and disadvantages occurring in the related art, and an aspect of the present disclosure provides a broadcast receiving apparatus which determines a user's intention if a channel zapping command is received, and provides a UI screen using which the user is able to select a broadcast channel and a method for tuning a channel thereof.

According to an aspect of an exemplary embodiment, a method for tuning a channel of a broadcast receiving apparatus includes displaying contents received through a first broadcast channel, changing, if a channel zapping command is received, the first broadcast channel, displaying, if the channel zapping command is consecutively received a plurality of times within a predetermined amount of time, a user interface (UI) using which a user can select a second broadcast channel, and tuning, if the second broadcast channel is selected from the UI, the selected second broadcast channel.

The displaying a UI may include determining, if the channel zapping command is consecutively received more than a predetermined number of times for the predetermined amount of time, existence of a channel search intention based on a watching time of each zapped broadcast channel, and displaying, if it is determined that the channel search intention exists, the UI.

The determining existence of a channel search intention may include calculating an average watching time of each zapped broadcast channel; and if the average time is shorter than a predetermined critical value, determining that the channel search intention exists, and if the average time is longer than the predetermined critical value, determining that the channel search intention does not exist.

The method may further include calculating a watching time of each zapped broadcast channel, determining a user's genre of interest based on the calculated watching time, and configuring the UI by sorting contents based on the user's genre of interest.

The contents of each zapped broadcast channel may be displayed in a main screen, and the UI may be displayed as a Picture In Picture (PIP) screen within the main screen.

The method may further include displaying, if a select command corresponding to the PIP screen is received, the second broadcast channel selected from the UI in the main screen.

The UI may be at least one of a preferred channel UI, a recommended channel UI, and an Electronic Program Guide (EPG) UI.

The method may further include displaying in the UI, if the UI is the preferred channel UI, a preferred channel list which is one of input by the user or automatically generated based on a user's channel selection history, displaying in the UI, if the UI is the recommended channel UI, recommended channels which are selected based on one of a user input, the user's channel selection history, channel ratings, current events and festivals, and displaying in the UI, if the UI is the EPG UI, a broadcast schedule which is prepared and provided by one of a manufacturer of the broadcast receiving apparatus, a broadcast company, a cable broadcast company and an EPG provider.

According to an aspect of another exemplary embodiment, a broadcast receiving apparatus includes a broadcast receiver configured to tune a first broadcast channel and a second broadcast channel and receive contents through the first broadcast channel and the second broadcast channel, a display configured to display the received contents, a storage configured to store broadcast channel information, an input unit configured to receive a channel zapping command, and a controller configured to, if the channel zapping command is received, control the broadcast receiver to change the first broadcast channel, and if the channel zapping command is consecutively received a plurality of times within a predetermined amount of time, display a UI using which a user can select a second broadcast channel, wherein if the second broadcast channel is selected from the UI, the controller controls the broadcast receiver to tune the selected second broadcast channel.

If the channel zapping command is consecutively received more than a predetermined number of times within the predetermined amount of time, the controller may determine existence of a channel search intention based on a watching time of each zapped broadcast channel, and if it is determined that the channel search intention exists, displays the UI.

The controller may calculate an average watching time of each zapped broadcast channel, the controller may determine, if the average time is shorter than a predetermined critical value, that the channel search intention exists, and the controller may determine, if the average time is longer than the predetermined critical value, that the channel search intention does not exist.

The controller may calculate a watching time of each zapped broadcast channel, determines a user's genre of interest based on the calculated watching time, and configures the UI by sorting contents based on the user's genre of interest.

The controller may display contents of each zapped broadcast channel in a main screen, and display the UI as a Picture In Picture (PIP) screen within the main screen.

The controller may display, if a select command corresponding to the PIP screen is received, the second broadcast channel selected from the UI in the main screen.

The UI may be at least one of a preferred channel UI, a recommended channel UI, and an Electronic Program Guide (EPG) UI.

The controller may display in the UI, if the UI is the preferred channel UI, a preferred channel list which is one of input by the user or automatically generated based on a user's channel selection history.

The controller may display in the UI, if the UI is the recommended channel UI, recommended channels which are selected based on one of a user input, the user's channel selection history, channel ratings, current events and festivals.

The controller may display in the UI, if the UI is the EPG UI, a broadcast schedule which is prepared and provided by one of a manufacturer of the broadcast receiving apparatus, a broadcast company, a cable broadcast company and an EPG provider.

According to an aspect of another exemplary embodiment, in a non-transitory recording medium including a program for executing a method for tuning a channel, the method includes displaying contents received through a first broadcast channel, changing, if a channel zapping command is received, the first broadcast channel, displaying, if the channel zapping command is consecutively received a plurality of times within a predetermined amount of time, a user interface (UI) using which a user can select a second broadcast channel, and tuning, if the second broadcast channel is selected from the UI, the selected second broadcast channel.

According to an aspect of another exemplary embodiment, a method for tuning a channel of a broadcast receiving apparatus, the method including receiving a channel zapping command a plurality of times, determining a rate of reception of the channel zapping command, and displaying a User Interface (UI) if the determined rate of reception is greater than a threshold value.

### BRIEF DESCRIPTION OF THE DRAWINGS

The above and/or other aspects will become apparent and more readily appreciated by describing certain exemplary embodiments with reference to the accompanying drawings, in which:
FIG. 1 is a block diagram of a broadcast receiving apparatus according to an exemplary embodiment;
FIGS.2 to 5 illustrate various UI screens using which a user can select a broadcast channel according to an exemplary embodiment;
FIG.6 is illustrates a main broadcast screen and a UI screen where a user selects a broadcast channel, which is arranged in a picture-in-picture (PIP) screen according to an exemplary embodiment; and
FIG.7 is a flow chart illustrating a method for tuning a channel of a broadcast receiving apparatus according to an exemplary embodiment.

### DETAILED DESCRIPTION OF EXEMPLARY EMBODIMENTS

Reference will now be made in detail to embodiments of the present general inventive concept, examples of which are illustrated in the accompanying drawings, wherein like reference numerals refer to the like elements throughout. The exemplary embodiments are described below in order to explain the present general inventive concept by referring to the figures.

The matters defined in the description, such as detailed construction and elements, are provided to assist in a comprehensive understanding of exemplary embodiments. However, exemplary embodiments can be practiced without those specifically defined matters. Also, well-known functions or constructions are not described in detail since they would obscure the application with unnecessary detail.

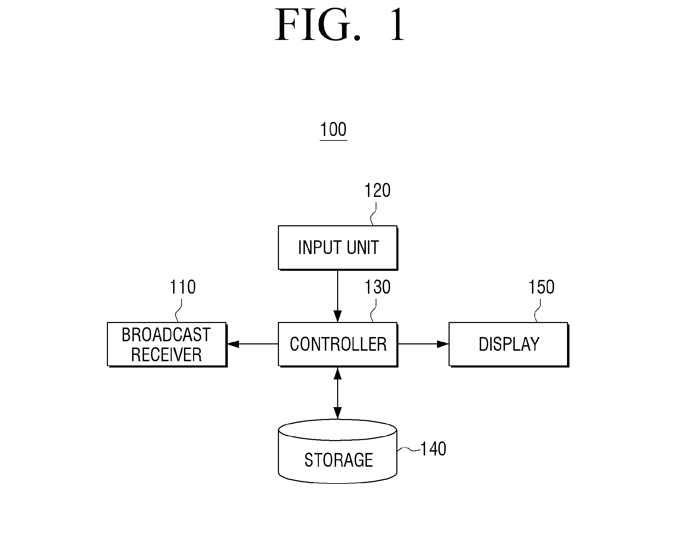

FIG. 1 is a block diagram of a broadcast receiving apparatus according to an exemplary embodiment.

According to FIG.1, a broadcast receiving apparatus 100 may include a broadcast receiver 110, an input unit 120, a controller 130, a storage 140, and a display 150.

The broadcast receiving apparatus 100 provides a user with a broadcast which is received in a wired or wireless manner through a display. The broadcast receiving apparatus 100 may further provide the user with an external input allowing the user to connect an external apparatus in a wired or wireless manner, and may playback and/or provide the user with a file (a moving image file, a still image file, a music file, etc.) stored in an embedded storage medium.

The broadcast receiving apparatus 100 is capable of receiving and outputting a broadcast signal, and may be embodied as a digital TV, but not limited thereto. The broadcast receiving apparatus 100 may be embodied as any apparatus capable of receiving a broadcast signal such as a mobile phone, a Portable Multimedia Player (PMP), an MP3 player, a Personal Computer (PC), etc.

The broadcast receiver 110 tunes a broadcast channel, and receives contents through the broadcast channel. To be specific, the broadcast receiver 110 receives a broadcast from a broadcasting station or a satellite in a wired or wireless manner, and demodulates the received broadcast. The broadcast receiver 110 may be embodied as a receiver comprising at least one tuner. The broadcast receiver 110 may be equipped with a plurality of tuners, and may receive broadcast signals from a plurality of channels at a time.

An external input apparatus (not shown) (for example, a remote controller) transmits information regarding a user control for controlling an operation of the broadcast receiving apparatus 100. The external input apparatus may include a power button, number buttons, channel search buttons (a channel up button and a channel down button), and a volume control button. The external input apparatus may be embodied as a touch screen.

The input unit 120 provides a configuration for receiving a user control (for example, a channel zapping command), and may be embodied as a control panel (for example, a touch panel) including letter buttons, number buttons, channel search buttons (a channel up button and a channel down button), a volume control button, a select button, etc. The input unit 120 may operate as a remote control receiver for receiving an operation of the external input apparatus (not shown).

Channel zapping refers to a user manipulation of a channel search button to move quickly from one channel to another. If the channel zapping command is consecutively received a plurality of times, the broadcast receiving apparatus 100 determines that the user is searching for a channel (i.e. the user is surfing).

If a channel zapping command is received, the controller 130 controls the broadcast receiver 110 to change a broadcast channel by performing the channel zapping according to broadcast channel information.

The controller 130 may determine whether the channel zapping command is received. For example, if power of the broadcast receiving apparatus 100 is turned on, the user searches a channel to watch by using the channel search button. If a channel is quickly changed from an initially watched screen to another screen (for example, in a few seconds), the controller 130 may determine that the user is performing channel zapping (i.e. the user is surfing). The controller 130 may determine whether the channel zapping is performed by setting an interval value between critical channels during the channel search and comparing the interval value with an interval value between other channels.

According to another exemplary embodiment, the controller 130 may not perform the channel zapping function. For example, if a menu for turning on or off the channel zapping function is provided, and the channel zapping function is turned on, the controller 130 may determine whether the channel zapping command is received. On the other hand, if the channel zapping function is turned off, the controller 130 may not determine whether the channel zapping command is received. In the present disclosure, it is assumed that the channel zapping function is turned on.

If the channel zapping is consecutively performed several times within a predetermined amount of time, the controller 130 may display a UI screen where the user selects a broadcast channel in the display 150. While the channel zapping is consecutively performed several times, the controller 130 may store information regarding a name and a watching time of a channel to be tuned, in the storage 140, which will be described below. Herein, the UI screen where the user selects a broadcast channel may be at least one of a preferred channel UI screen, a recommended channel UI screen, and an electronic program guide (EPG) UI screen.

If the channel zapping is consecutively performed more than a predetermined number of times or more within a predetermined amount of time, the controller 130 may determine existence of a channel search intention based on a watching time of each zapped broadcast channel, and if it is determined that the channel search intention exists, the controller 130 may display the UI screen using which the user can select a broadcast channel in the display 150.

To be specific, the controller 130 may calculate an average watching time of each of the zapped broadcast channels (i.e. the rate at which channels are changed), and if the calculated average time is shorter than a predetermined critical value, may determine that the channel search intention exists. However, if the calculated average time is longer than the predetermined critical value, the controller 130 may determine that the channel search intention does not exist. Herein, the critical value may be received from the user, or may be set on the broadcast receiving apparatus 100 by default.

According to a non-limiting exemplary embodiment, it is assumed that the channel zapping is performed on a five-channel basis, and a predetermined critical value is seven seconds. In such a scenario, if the average watching time of five channels is six seconds, the controller 130 may determine that a user channel search intention exists. if the average watching time of the five channels is eight seconds, the controller 130 may determine that the user channel search intention does not exist. The controller 130 may set the five-channel zapping group continuously thereby determining the channel search intention continuously. That is, the controller 130 may set the five count of channels from the second zapped channel to the sixth zapped channel as a new five-channel zapping group, calculate an average watching time in the new five-channel zapping group, compare the average with the predetermined critical value, and repeat such operations, thereby determining the channel search intention, according to the exemplary embodiment.

Meanwhile, if it is determined that the user channel search intention exists, the controller 130 may automatically display a recommended channel UI where the user selects a broadcast channel and the like through the display 150.

Although the aforementioned exemplary embodiment described that the channel zapping is performed on a five-channel basis and a predetermined critical value is seven seconds,, it is merely an exemplary embodiment, and the channel zapping group size and the critical value may vary variously depending upon a numerical value which is set on the broadcast receiving apparatus 100 by default or a numerical value which is input by a user.

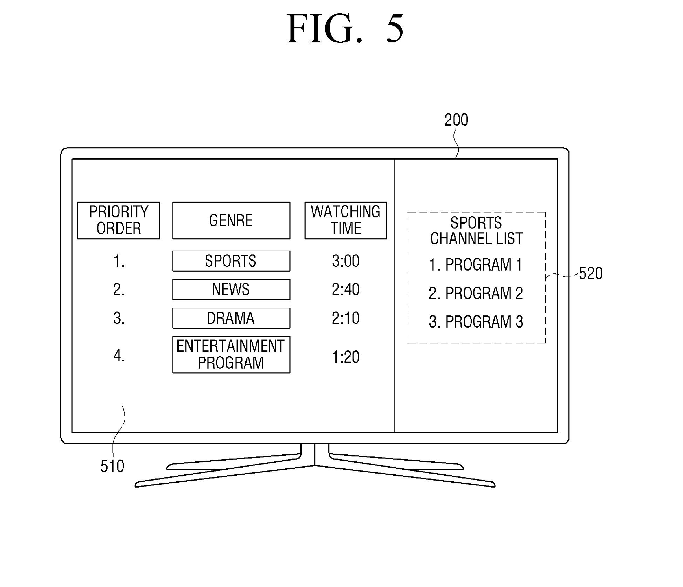

Furthermore, controller 130 may configure the aforementioned UI, where a user selects a broadcast channel, by calculating a watching time of each zapped broadcast channels, determining a user interest genre based on the calculated watching time, and sorting the content corresponding to the user interest genre. These operations will be described later, in further detail with reference to FIG.5.

The controller 130 may display the contents of each zapped broadcast channel in the main screen of the display 150, and may display the UI screen, using which the user can select a broadcast channel, in a picture-in-picture (PIP) screen of the display 150.

If a select command corresponding to the PIP screen is received, the controller 130 may control the display 150 to display the selected broadcast channel, selected by the user in the PIP screen, on the main screen. Herein, the displaying of the selected channel, selected by the user in the PIP screen, on the main screen may be performed in response to a select key, screen touch, a menu, etc.

The storage 140 may store broadcast channel information. The storage 120 may be configured with a Double Data Rate (DDR) Random Access Memory (RAM), a Read-Only Memory (ROM), a flash memory, a Compact Disk (CD), a Digital Versatile Disk (DVD), etc. The controller 130 may store a name and/or a watching time of a channel which is tuned, if the channel zapping is performed, in the storage 140. The controller 130 may perform calculation such as adding the watching time by using the channel name and store the same in association with the respective channel name in the storage 140.

The display 150 displays a screen according to a screen display command transmitted from the controller 130. The display 150 may be configured with a Liquid Crystal Display (LCD), a Light Emitting Diode (LED), a Plasma Display Panel (PDP), an Organic Light-Emitting Diode (OLED), etc. According to a channel zapping input, the controller 130 displays the aforementioned UI screen using which a user can select a broadcast channel in the display 150. The UI using which a user can select a broadcast channel may be a preferred channel UI, a recommended channel UI, an EPG UI, or a UI displaying contents sorted by genre as illustrated in FIG.5.

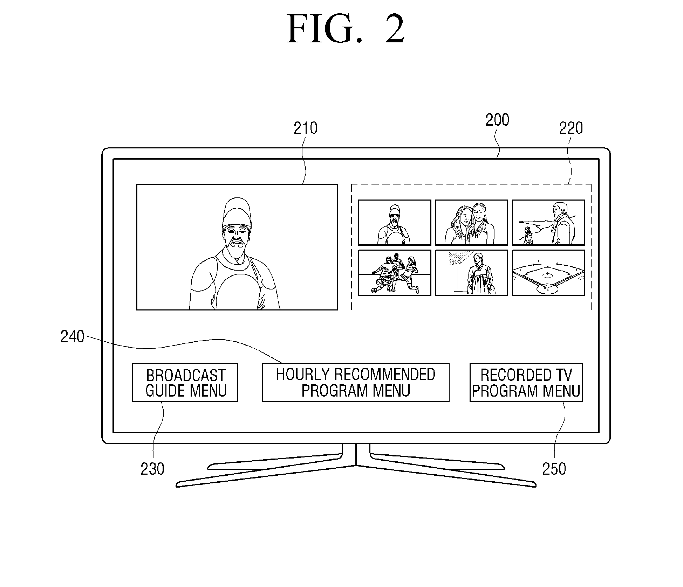

FIGS.2 to 5 illustrate various UI screens using which a user can select a broadcast channel according to exemplary embodiments. If the channel zapping command is consecutively received a plurality of times within a predetermined amount of time, and in particular, if it is determined that the user channel search intention exists, the controller 130 may automatically display the aforementioned recommended channel UI using which a user can select a broadcast channel. The UI screen using which a user can select a broadcast channel may be set by default, or may be selected and set by a user.

FIG.2 illustrates a recommended channel UI using which a user can select a broadcast channel according to an exemplary embodiment.

According to FIG.2, the controller 130 controls the display 150 to display a display screen 200 on the display 150. If the channel zapping command is consecutively received a plurality of times within a predetermined amount of time, the controller 130 may automatically display the recommended channel UI using which a user can select a broadcast channel. That is, if it is determined that the user channel search intention exists, the controller 130 may display a recommended channel UI using which a user can select a broadcast channel.

As shown in FIG. 2, a screen 220 including a plurality of recommended channels is arranged. While FIG.2 illustrates the screen 220 including six recommended channels, the number of recommended channels to be displayed is not limited thereto. In a left upper area of the display screen 200, a screen 210 from among screens of the plurality of recommended channels may be displayed.

A broadcast guide menu 230, an hourly recommended program menu 240, and a recorded TV program menu 250 may be arranged along the bottom of the display screen 200. Herein, the broadcast guide menu 230 is a menu where a user is able to see a schedule and details of various broadcasts, and the hourly recommended program menu 240 is a menu where the user is able to select a recommended program from one or more programs which are suggested on an hourly basis. Furthermore, the recorded TV program menu 250 is a menu where the user is able to select a recorded TV program.

The channels recommended to the user in the recommended channel UI may be selected based on user input, user's channel selection history, channel rating, occasions/current events/festivals (for example channels featuring Christmas related content might be recommended during Christmas time), etc., but is not limited thereto.

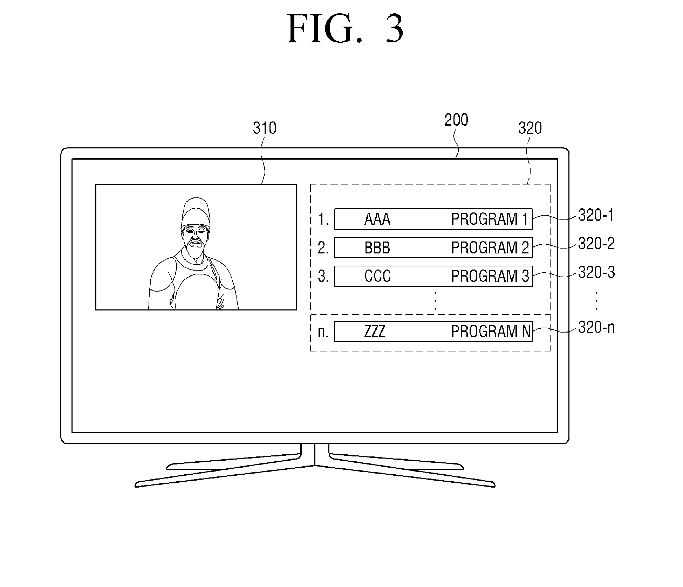

FIG.3 illustrates a preferred channel UI where a user selects a broadcast channel according to an exemplary embodiment.

According to FIG. 3, if the channel zapping command is consecutively received a plurality of times within a predetermined amount of time, the controller 130 may automatically display the aforementioned preferred channel UI using which a user can select a broadcast channel. The controller 130 may determine whether a user channel search intention exists, and if it is determined that the user channel search intention exists, the controller 130 may display the preferred channel UI using which a user can select a broadcast channel.

As shown in FIG. 3, screen 320 displays a preferred channel list 321-1 to 320-n. The preferred channel list 320-1 to 320-n may be input by a user, or may be automatically generated by the controller 130 based on a user's channel selection history, but is not limited thereto. Screen 310 may display a channel from among the preferred channel list 320-1 to 320-n.

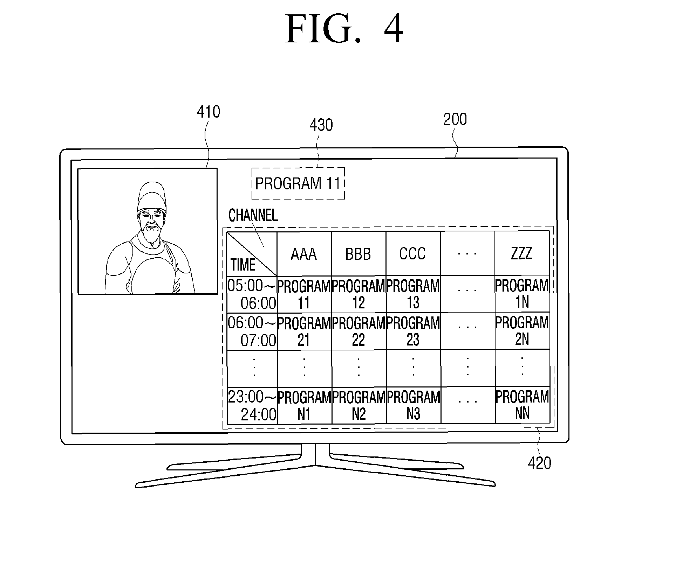

FIG.4 illustrates a preferred channel UI where a user selects a broadcast channel according to an exemplary embodiment.

According to FIG. 4, if the channel zapping command is consecutively received a plurality of times within a predetermined amount of time, the controller 130 may automatically display the aforementioned EPG UI using which a user can select a broadcast channel. The controller 130 may determine whether the user channel search intention exists, and if it is determined that the channel search intention exists, the controller 130 may display the EPG UI using which a user can select a broadcast channel.

As shown in FIG. 3, a broadcast schedule 420 is displayed. The broadcast schedule 420 may be prepared and provided by a manufacturer of the broadcast receiving apparatus 100, a broadcast company, a cable broadcast company, or an EPG provider.

For example, if a user selects a "Program 11" which is broadcasted on AAA between 0500 hours and 0600 hours, a screen 410 may be displayed in an upper left portion of the display screen 200. Furthermore, a title of the selected program may be displayed on an upper portion 430 of the display screen 200.

FIG.5 illustrates a UI, using which a user can select a broadcast channel, displaying content sorted by genre, according to an exemplary embodiment.

According to FIG.5, if the channel zapping command is consecutively received a plurality of times within a predetermined amount of time, the controller 130 may automatically display a UI, using which a user can select a broadcast channel, displaying content sorted by genre. The controller 130 may determine whether the user channel search intention exists, and if it is determined that the user channel search intention exists, the controller 130 may display a UI, using which a user can select a broadcast channel, displaying content sorted by genre.

As shown in FIG. 5, screen 510 displays programs by calculating a total watching time of each broadcast genre and sorts the programs according to a priority order. Screen 520 recommends a program from a genre having a high priority.

For example, if a user zapping command is received, a name, a genre, and a watching time of each channel may be calculated. Screen 510 may add and display the calculated genre and watching time of each genre. According to the exemplary embodiment shown in FIG. 5, the watching time of a sports program is three minutes, the watching time of a news program is two minutes and forty seconds, the watching time of a drama program is two minutes and ten seconds, and the watching time of an entertainment program is one minute and twenty seconds. Screen 510 displays a program 1, a program 2, and a program 3 which belong to the sports genre and are sorted. The programs may be sorted in an order of program which is zapped for a large amount of time, or may be randomly recommended, sorted, and displayed on screen 520 from among the sports channels.

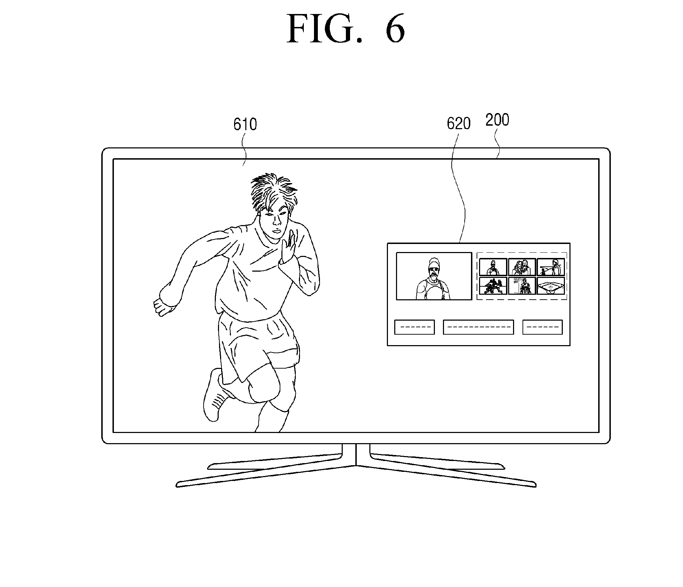

FIG.6 illustrates a main broadcast screen and a UI screen where a user selects a broadcast channel, which is arranged in a PIP screen according to an exemplary embodiment.

According to FIG.6, if the channel zapping command is consecutively received a plurality of times within a predetermined amount of time, the controller 130 may provide a UI using which a user can select a channel on a PIP screen.

As shown in FIG. 6, the controller 130 may display a tuned broadcast channel program in a main screen 610, and may display a UI screen using which a user can select a broadcast channel according to various exemplary embodiments in a sub screen 620. The sub screen 620 may display at least one of the preferred channel UI screen, the recommended channel UI screen, and the EPG UI screen.

Herein, if a select command corresponding to the PIP screen is received, the controller 130 may control the display 150 to display the selected broadcast channel, selected by the user in the PIP screen (sub-screen 620), on the main screen 610. The displaying of the selected channel, selected by the user in the PIP screen, on the main screen may be performed in response to a select key, screen touch, a menu, etc.

Although FIGS. 2-5 illustrate various UI screens being displayed at certain positions in the display screen 200, they are merely an exemplary embodiment, and a position where a UI screen is displayed may vary.

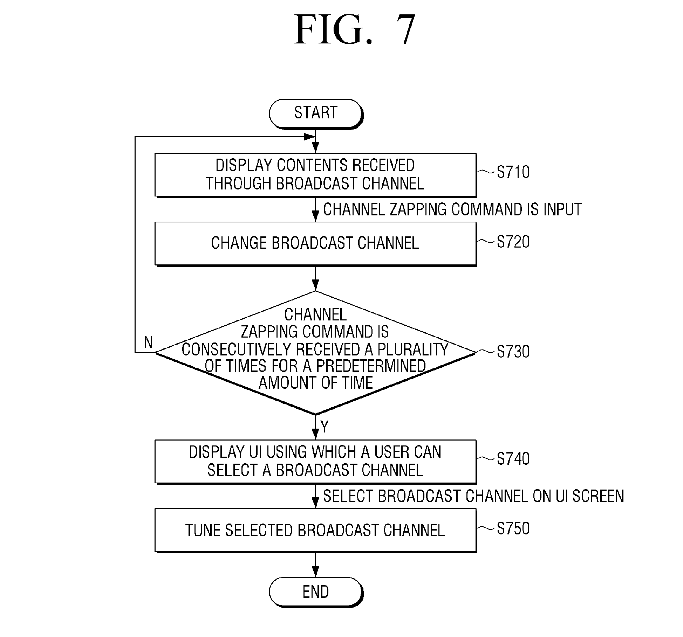

FIG.7 is a flow chart illustrating a method for tuning a channel of a broadcast receiving channel according to an exemplary embodiment.

According to FIG. 7, a broadcast receiving apparatus displays contents received through a broadcast channel (S710).

If a channel zapping command is received, the broadcast channel currently being displayed is changed (S720). A method of determining whether a channel zapping command is received is discussed above in detail.

If channel zapping command is consecutively received a plurality of times within a predetermined amount of time (S730), a UI, using which a user can select a broadcast channel, is displayed (S740).

As specified above, the UI using which a user can select a broadcast channel may include a recommended channel UI, a preferred channel UI, an EPG UI, a UI displaying contents sorted by genre, etc. The UI is not limited thereto, and may include a UI for receiving an external input, and the like.

If a broadcast channel is selected from a UI screen, the selected broadcast channel is tuned (S750). The controller 130 may control the broadcast receiving apparatus 110 to tune the selected broadcast channel.

Herein, if a UI is displayed (S740), and the channel zapping is consecutively performed more than a predetermined number of times or more within a predetermined amount of time, a channel search intention may be determined based on a watching time of each of the zapped broadcast channel, as discussed above in detail. If it is determined that the channel search intention exists, a UI screen using which a user can select a broadcast channel may be displayed.

For determining the existence of the channel search intention, an average watching time of each of the zapped broadcast channel may be calculated, and if the average time is shorter than a predetermined critical value, it may be determined that the channel search intention exists. If the average time is longer than the predetermined critical value, it may be determined that the channel search intention does not exist. The process of determining whether a channel search intention exists has been discussed above in detail.

A UI may be configured by calculating a watching time of each zapped broadcast channel, determining a user interest genre based on the calculated watching time, and sorting the contents corresponding to the determined user interest genre.

Furthermore, the contents of each zapped broadcast channel may be displayed in a main screen, and a UI screen using which a user can select a channel may be displayed as a PIP screen within the main screen. The process of configuring the UI screen has been discussed above in detail.

If a select command corresponding to the PIP screen is received, a UI screen using which a user selects a broadcast channel may be displayed in the main screen.

The aforementioned UI screen using which a use can select a broadcast channel may include at least one of a preferred channel UI, a recommended channel UI, and an EPG UI. The UI Screen is not limited to the above mentioned forms and other forms of UI screens may be displayed to carry out the above mentioned functions.

Furthermore, a program for executing a method for tuning a channel of a broadcast receiving channel may be stored in a non-transitory recording medium.

A non-transitory computer readable medium may include a program for executing displaying contents received through a broadcast channel, if a channel zapping command is received, changing a broadcast channel by performing channel zapping, if the channel zapping command is consecutively received a plurality of times within a predetermined amount of time, displaying a UI using which a user can select a broadcast channel, and if a broadcast channel is selected from the UI using which a user can select a broadcast channel, tuning the selected broadcast channel.

The non-transitory computer readable medium is a medium which semi-permanently stores data and is readable by a device. Various applications and programs, as described above, may be stored and provided in the non-transitory computer readable medium, such as a compact disc (CD), a digital versatile disk (DVD), a hard disk, a Blu-ray disk, a universal serial bus (USB), a memory card, and a read-only memory (ROM), etc.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

Although a few preferred embodiments have been shown and described, it will be appreciated by those skilled in the art that various changes and modifications might be made without departing from the scope of the invention, as defined in the appended claims.

## Claims

1. A method for tuning a channel of a broadcast receiving apparatus, the method comprising:
displaying contents received through a first broadcast channel;
changing, when a channel zapping command is received, the first broadcast channel;
displaying, when the channel zapping command is consecutively received a plurality of times within a predetermined amount of time, a user interface (UI) using which a user can select a second broadcast channel; and
tuning, when the second broadcast channel is selected from the UI, the selected second broadcast channel.

2. The method as claimed in claim 1, wherein the displaying a UI comprises determining, when the channel zapping command is consecutively received more than a predetermined number of times for the predetermined amount of time, existence of a channel search intention based on a watching time of each zapped broadcast channel; and displaying, when it is determined that the channel search intention exists, the UI.

3. The method as claimed in claim 2, wherein the determining existence of a channel search intention comprises:
calculating an average watching time of each zapped broadcast channel; and when the average time is shorter than a predetermined critical value, determining that the channel search intention exists, and when the average time is longer than the predetermined critical value, determining that the channel search intention does not exist.

4. The method as claimed in any one of claims 1 to 3, further comprising:
calculating a watching time of each zapped broadcast channel;
determining a user's genre of interest based on the calculated watching time; and
configuring the UI by sorting contents based on the user's genre of interest.

5. The method as claimed in any one of claims 1 to 4, wherein
the contents of each zapped broadcast channel are displayed in a main screen, and
the UI is displayed as a Picture In Picture (PIP) screen within the main screen.

6. The method as claimed in claim 5 further comprising:
displaying, when a select command corresponding to the PIP screen is received, the second broadcast channel selected from the UI in the main screen.

7. The method as claimed in any one of claims 1 to 6, wherein the UI is at least one of a preferred channel UI, a recommended channel UI, and an Electronic Program Guide (EPG) UI.

8. A broadcast receiving apparatus comprising:
a broadcast receiver configured to tune a first broadcast channel and a second broadcast channel and receive contents through the first broadcast channel and the second broadcast channel;
a display configured to display the received contents;
a storage configured to store broadcast channel information;
an input unit configured to receive a channel zapping command; and
a controller configured to, when the channel zapping command is received, control the broadcast receiver to change the first broadcast channel, and when the channel zapping command is consecutively received a plurality of times within a predetermined amount of time, display a UI using which a user can select a second broadcast channel,
wherein when the second broadcast channel is selected from the UI, the controller controls the broadcast receiver to tune the selected second broadcast channel.

9. The apparatus as claimed in claim 8, wherein when the channel zapping command is consecutively received more than a predetermined number of times for the predetermined amount of time, the controller determines existence of a channel search intention based on a watching time of each zapped broadcast channel, and when it is determined that the channel search intention exists, displays the UI.

10. The apparatus as claimed in claim 9, wherein
the controller calculates an average watching time of each zapped broadcast channel,
the controller determines, when the average time is shorter than a predetermined critical value, that the channel search intention exists, and
the controller determines, when the average time is longer than the predetermined critical value, that the channel search intention does not exist.

11. The apparatus as claimed in any one of claims 8 to 10, wherein the controller calculates a watching time of each zapped broadcast channel, determines a user's genre of interest based on the calculated watching time, and configures the UI by sorting contents based on the user's genre of interest.

12. The apparatus as claimed in any one of claims 8 to 11, wherein the controller displays contents of each zapped broadcast channel in a main screen, and displays the UI as a Picture In Picture (PIP) screen within the main screen.

13. The apparatus as claimed in claim 12, wherein when a select command corresponding to the PIP screen is received, the controller displays the second broadcast channel selected from the UI in the main screen.

14. The apparatus as claimed in any one of claims 8 to 13, wherein the UI is at least one of a preferred channel UI, a recommended channel UI, and an Electronic Program Guide (EPG) UI.

15. A non-transitory recording medium including a program for executing a method for tuning a channel, the method comprising:
displaying contents received through a first broadcast channel;
changing, when a channel zapping command is received, the first broadcast channel;
displaying, when the channel zapping command is consecutively received a plurality of times within a predetermined amount of time, a user interface (UI) using which a user can select a second broadcast channel; and
tuning, when the second broadcast channel is selected from the UI, the selected second broadcast channel.
